# EUROPEAN PATENT APPLICATION

(11) **EP 1 074 924 A2**
(43) Date of publication of application: **07.02.2001**
(21) Application number: 00305699.1
(22) Date of filing: 06.07.2000
(51) Int. Cl.: G06F 17/30

(54) **Method and system for creating customized products**

(30) Priority: 30.07.1999 US 365097
(71) Applicant: PeakCare LLC, San Diego, California 92130 (US)
(72) Inventor: Leeds, Gary, Rancho Santa Fe, California 92067 (US)
(74) Representative: Thomas, Philip John Duval

(57) **Abstract**

A method for creating a customized production using an internet communications system includes providing electronic access through the internet communications system to an archival database. More specifically, the digitized database includes a plethora of individually accessible excerpts which are presorted according to their milieu, such as audio works, visual works and audio/visual works. Additionally, the digitized excerpts are categorized within their respective milieus according to subject matter, and they are further sub-divided within each category according to topic. A customized production can then be created by first choosing a milieu, followed by selection of a category and, then, retrieval of topical excerpts from one or more categories. The retrieved excerpts are then collated, redacted and converted from their digitized format into a predetermined media form (such as a videotape, audiotape, compact disk or DVD). The result is the customized production. Also, one retrieved excerpt can be overlaid with another to create a composite excerpt for use in the customized production.

## Description

### FIELD OF THE INVENTION

The present invention pertains generally to systems and methods for creating audio/visual presentations. More particularly, the present invention pertains to systems and methods for selectively organizing and presenting material in the form of a customized production. The present invention is particularly, but not exclusively, useful as a method for retrieving, collating, redacting and subsequently converting digitized audio/visual excerpts into a predetermined media form to compose the customized production using a communications system such as the internet.

### BACKGROUND OF THE INVENTION

Within the last several years, various communications systems have been developed which provide users with continuous access to a vast amount of digitized information. A good example of such a system, and perhaps also the most well known of these systems, is the so-called "internet." Through the internet, a user is able to instantaneously accomplish many communications tasks that in the not-so-distant past would have required hours, days or even weeks to complete. Now, however, an internet user can transfer information from point to point, do research on any number of topics, and even complete business transactions without any delay; using only a personal computer.

Despite the vast amount of digitized information that is available on the internet, it often happens that an individual will have certain informational requirements which need to be addressed in a customized or personalized format. For example, a person may have a need for a particular educational training aid that needs to be tailored to meet certain requirements. Additional examples of specific information based productions, which may need to be customized for a specific situation or circumstance, include business presentations and entertainment segments. It happens, however, that the desired information for these productions may not always be available on a communications system (e.g. the internet) in a suitable format.

In light of the above, it is an object of the present invention to provide a method for creating a customized production using a communications system, such as the internet, which provides the user with access to a database that includes disparate digitized excerpts. Another object of the present invention is to provide a method for creating a customized production which allows the user to collate, redact and compile disparate digitized excerpts from an archival database into a customized audio/visual production. Still another object of the present invention is to provide a method for creating a customized production which is easy to use and comparatively cost effective.

### SUMMARY OF THE PREFERRED EMBODIMENTS

A method for creating a customized audio/visual production in accordance with the present invention requires accessing an archival data base using a communications system, such as the internet. For the present invention the database (i.e. archives) will include a plurality of disparate digitized excerpts. More specifically, within the database, each of the digitized excerpts is assigned to a milieu. For example, a first milieu might contain only audio works, while a second milieu would contain only visual works. Of course, other milieus, containing different types of works or different presentations of works, are also contemplated for the present invention and may be established in the archives. Each excerpt within a particular milieu is then assigned to a specific category.

Examples of categories that can be established in each of the milieus of the archival database include: an entertainment category, a vocational category, and an educational category. Within each of these categories, the excerpts can be further arranged according to topic. By way of example, excerpts in the entertainment category can be arranged according to whether they are musical works, literary works, sports related works, or other topical works. In a similar manner, excerpts in the vocational category can be arranged according to whether they include manufacturing information, professional information, or merchandising information. Further, and still by way of example, excerpts in the educational category might be topically arranged according to whether they are historical works, scientific works, or works of fine arts.

In the process of preparing or creating a production in accordance with the present invention, the user would first establish access to the archival database through the internet. With internet access established, the user then needs to choose a milieu from the archives and to select a category from the chosen milieu. Once the category has been selected, the user then retrieves at least one excerpt from the selected category and collates this excerpt with other retrieved excerpts to arrange them all in an organized sequence. When doing this, it will be appreciated that it is possible to overlay one excerpt with another to create a composite excerpt. For instance, an audio excerpt can be overlaid onto a video excerpt to create a composite excerpt which is both audio and visual. The collated excerpts can then be redacted to put the excerpts into an arrangement for the customized production.

Through successive iterations of choosing a milieu, selecting a category, retrieving an excerpt, and then collating, redacting, possibly overlaying and compiling this excerpt with others, a customized production can be created which will meet the specific needs and desires of the user. As intended for the present invention, the customized production can be presented in any predetermined media form, such as videotapes, audiotapes, compact disks, and digital video disks.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:

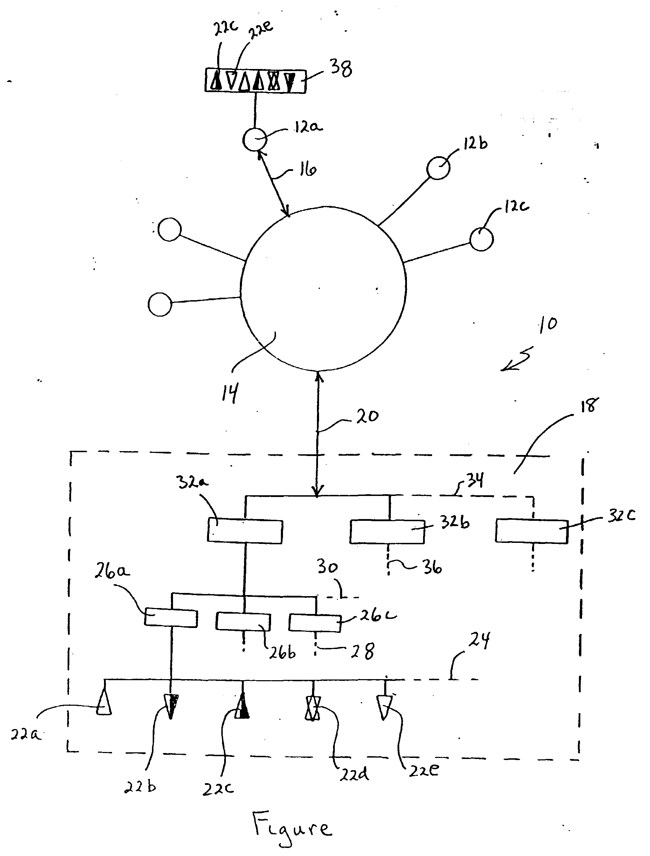

The Figure is a diagrammatic presentation of an interconnected system on which the methods of the present invention can be accomplished.

### DESCRIPTION OF THE PREFERRED EMBODIMENT

Referring to the Figure, an interconnected system for practicing the methods of the present invention is shown and is generally designated 10. As shown for the system 10, it is contemplated by the present invention that a plurality of personal computers 12 can be connected with a communications network (the computers 12a, 12b and 12c are only exemplary). For purposes of the present invention this communications network is considered to be an internet 14. It will be appreciated, however, that other similar type communications networks can just as easily be used in the system 10. In any event, as shown, the personal computer 12a is connected with the internet 14 for two-way communications via a line 16. Also, the internet 14 is connected for two-way communications with an archival database 18 via a line 20. Through these connections, and by using proper accessing procedures established for the internet 14, the computer 12a is able to establish a direct communications link over the internet 14 from the computer 12a to the database 18.

As shown in the Figure, the database 18 (archives) includes a plurality of digitized excerpts 22, of which the excerpts 22a-e are only exemplary. As indicated by the dashed line 24 in the Figure, many additional such excerpts 22 are contemplated for the present invention. Also, in accordance with the present invention, these excerpts 22 may be either audio or visual in nature, or they may be a composite audio/visual excerpt 22. In any event, as shown in the Figure, excerpts 22 are grouped together in categories 26, of which the categories 26a-c are only exemplary. As indicated by the dashed line 28 (shown extending from the block identified as category 26c) within each category 26 there will be found a plurality of disparate digitized excerpts 22. Further, as indicated by the dashed line 30, there can be additional categories 26.

The Figure also shows that within the database 18 there are a plurality of milieus 32 of which the milieus 32a-c are only exemplary. As indicated by the dashed line 34 there can be many additional milieus 32 in the database 18, and there can be many additional categories 26 in each milieu 32. As intended for the methods of the present invention, the milieus 32, categories 26 and excerpts 22 in database 18 can be accessed by the computer 12 over the Internet 14.

For the preparation, or creation, of an audio/visual production 38 in accordance with the methods of the present invention, a user activates his/her personal computer 12a and, using protocol procedures, connects the computer 12a with the internet 14. Using proper routing procedures on the internet 14, the user then establishes access to the database 18. Once access is established to the database 18, a milieu is chosen. For example, milieu 32a can include visual works and milieu 32b can include audio works, or vice versa. Other milieus 32 (e.g. 32c) can also be established as necessary.

Within a chosen milieu 32, the user then selects a category 26 (e.g. category 26a, 26b or 26c). Again, by way of example, the category 26a may include entertainment works, while categories 26b and 26c, respectively include vocational and educational works. Within the selected category 26, the user is able to selectively view or listen to digitized excerpts 22 and to identify and retrieve any excerpts 22 that may be desired. After the retrieved excerpts 22 have been collected, they may then be individually or collectively collated, redacted or otherwise altered to compile the customized production 38 desired by the user.

As intended for the present invention, the customized production 38 can be assembled by the provider of the database 18 and subsequently reviewed. During review, the excerpts 22 can be rearranged, selectively eliminated, or further altered to create the production 38. The production 38 can then be assembled and mailed or posted to the user by the provider of the database 18. Alternatively, as shown in the Figure, the customized program 38 can be assembled directly by the user. In either case, depending upon the desires and capabilities of the user, the customized program 38 can be assembled in a predetermined media form, such as videotapes, audiotapes, compact disks, and digital video disks.

While the particular Method and System for Creating Customized Products as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A method for creating a customized production which comprises the steps of:
accessing an archives, said archives including a plurality of digitized excerpts wherein each said excerpt is assigned to a milieu and each said excerpt is categorized in said milieu;
choosing a milieu from said archives;
selecting a category from said chosen milieu;
retrieving a plurality of said excerpts by type from said selected category; and
compiling said plurality of excerpts to create said customized production in a predetermined media form.

2. A method as recited in claim 1 further comprising the steps of:
collating said excerpts to arrange said excerpts in an organized sequence; and
redacting said sequence of excerpts to put said excerpts into an arrangement for said production.

3. A method as recited in claim 2 further comprising the step of overlaying one said excerpt with another said excerpt.

4. A method as recited in claim 1 wherein said archives includes a plurality of milieus, with said excerpts of a first said milieu being audio works and said excerpts of a second said milieu being visual works.

5. A method as recited in claim 1 wherein said categories in each said milieu include an entertainment category, a vocational category, and an educational category.

6. A method as recited in claim 5 wherein said excerpts in said entertainment category include musical works, literary works, sports related works and other works.

7. A method as recited in claim 5 wherein said excerpts in said vocational category include manufacturing information, professional information, and merchandising information.

8. A method as recited in claim 5 wherein said excerpts in said educational category include historical works, scientific works, and fine arts.

9. A method as recited in claim 1 wherein said compiling step requires successive iterations of said choosing step, said selecting step and said retrieving step.

10. A method as recited in claim 1 wherein said predetermined media form is taken from a group consisting of videotapes, audiotapes, compact disks, and digital video disks.

11. A method for creating a customized production which comprises the steps of:
electronically accessing a consolidated database through an Internet connection, said database including a plurality of electronically digitized excerpts;
retrieving at least one said digitized excerpt from said database; and
converting said digitized excerpt to a predetermined media form for use as said customized production.

12. A method as recited in claim 11 further comprising the steps of:
assigning each said excerpt to a milieu; and
categorizing each said excerpt in said milieu.

13. A method as recited in claim 12 further comprising the steps of:
collating said excerpts to arrange said excerpts in an organized sequence;
redacting said sequence of excerpts to put said excerpts into an arrangement for said production; and
overlaying one said excerpt with another said excerpt.

14. A method as recited in claim 13 wherein said database includes a plurality of milieus, with said excerpts of a first said milieu being audio works and said excerpts of a second said milieu being visual works; wherein said categories in each said milieu include an entertainment category, a vocational category, and an educational category; wherein said excerpts in said entertainment category include musical works, literary works, sports related works and other works; wherein said excerpts in said vocational category include manufacturing information, professional information, and merchandising information; and further wherein said excerpts in said educational category include historical works, scientific works, and fine arts.

15. A method as recited in claim 1 wherein said predetermined media form is taken from a group consisting of videotapes, audiotapes, compact disks, and digital video disks.

16. A method for employing an internet communications system to create a customized production which comprises the steps of:
creating a digitized database, said database including a plurality of digitized excerpts;
connecting said digitized database to said internet communications system; and
providing access through said Internet communications system to said digitized database for retrieval of at least one digitized excerpt.

17. A method as recited in claim 16 further comprising the steps of: assigning each said digitized excerpt to a milieu; and categorizing each said digitized excerpt in said milieu.

18. A method as recited in claim 17 further comprising the steps of:
collating said digitized excerpts to arrange said digitized excerpts in an organized sequence;
redacting said sequence of digitized excerpts to put said digitized excerpts into an arrangement for said production; and
overlaying one said digitized excerpt with another said digitized excerpt to make a composite excerpt therefrom.

19. A method as recited in claim 18 wherein said database includes a plurality of milieus, with said digitized excerpts of a first said milieu being audio works and said digitized excerpts of a second said milieu being visual works; wherein said categories in each said milieu include an entertainment category, a vocational category, and an educational category; wherein said excerpts in said entertainment category include musical works, literary works, sports related works and other works; wherein said excerpts in said vocational category include manufacturing information, professional information, and merchandising information; and further wherein said excerpts in said educational category include historical works, scientific works, and fine arts.

20. A method as recited in claim 16 wherein said predetermined media form is taken from a group consisting of videotapes, audiotapes, compact disks, and digital video disks.

21. An apparatus for making a customized recording, said apparatus comprising:
a means for accessing one or more archives, said archives including a plurality of digitized excerpts wherein each said excerpt is assigned to a milieu and each said excerpt is categorized in said milieu;
a means for retrieving a plurality of said excerpts according to a selected milieu and a selected category from said selected milieu; and
a means for compiling said plurality of said excerpts to create said customized production in a predetermined media form.
